# EUROPÄISCHE PATENTSCHRIFT

(11) **EP 2 684 781 B1**
(45) Veröffentlichungstag und Bekanntmachung des Hinweises auf die Patenterteilung: **10.05.2017**
(21) Anmeldenummer: 13175544.9
(22) Anmeldetag: 08.07.2013
(51) Int. Cl.: B62D 33/04, B60J 5/06, B62D 33/027

(54) **Aufbau zum Befördern von Gütern**
Assembly for conveying goods
Structure pour le transports de biens

(30) Priorität: 11.07.2012 DE 102012212130
(43) Veröffentlichungstag der Anmeldung: 15.01.2014
(73) Patentinhaber: Fahrzeugbau Heinz Böse GmbH, 59889 Eslohe-Reiste (DE)
(72) Erfinder: Böse, Maximilian, 59889 Eslohe-reiste (DE)
(74) Vertreter: Linnemann, Winfried

(56) Entgegenhaltungen:
- EP-A1- 0 159 206
- EP-A2- 2 218 600
- EP-A2- 2 676 824
- GB-A- 1 021 257
- JP-U- S61 101 028

## Beschreibung

Die Erfindung betrifft einen Aufbau zum Befördern von Gütern, insbesondere für einen Lastkraftwagen, einen Anhänger, einen Absetzcontainer, eine Wechselbrücke, einen Sattelauflieger oder dergleichen, aufweisend wenigstens eine seitliche Verladeöffnung und eine faltbare Seitenwand, wobei die faltbare Seitenwand zumindest an einer im oberen Bereich der seitlichen Verladeöffnung angeordneten oberen Schiene zwischen einer vollständig entfalteten Stellung und einer vollständig gefalteten Stellung bewegbar gelagert ist.
Ein entsprechender Aufbau ist beispielsweise aus der Patentschrift US 5 215 349 A oder aus der EP0159206A1 bekannt. Bei herkömmlichen Aufbauten zum Befördern von Gütern der vorgenannten Art besteht das Problem, dass die faltbare Seitenwand in ihrer vollständig gefalteten Stellung einen Teil der Verladeöffnung bedeckt und somit nicht die gesamte Verladeöffnung zum Be- beziehungsweise Entladen von Gütern zugänglich ist. Es ist bei den herkömmlichen Aufbauten daher erforderlich, die in ihrer vollständig gefalteten Stellung befindliche faltbare Seitenwand während eines Verladevorgangs relativ zur Verladeöffnung an unterschiedlichen Stellen zu positionieren. Hierdurch wird die Handhabung der herkömmlichen Aufbauten umständlich, wodurch zudem der Zeitaufwand für einen Verladevorgang nachteilig erhöht wird.
Um diese Problematik zu umgehen, muss die in ihrer vollständig gefalteten Stellung befindliche faltbare Seitenwand vollständig aus dem Bereich der Verladeöffnung entfernbar sein. Dieser Lösungsansatz ist beispielsweise aus der Gebrauchsmusterschrift DE 20 2012 000 070 U1 bekannt. Aus dieser ist ein Transportbehälter zum Befördern von Gütern bekannt, der eine im Wesentlichen rechteckige Grundfläche aufweist, wobei auf zumindest einer der langen Seiten des Behälters eine Verladeöffnung und eine faltbare Seitenwand angeordnet sind. Die faltbare Seitenwand ist längsverschieblich an einer im oberen Bereich der Verladeöffnung angeordneten oberen Schiene und einer im unteren Bereich der Verladeöffnung angeordneten unteren Schiene zwischen einer vollständig entfalteten Stellung und einer vollständig gefalteten Stellung bewegbar gelagert. Die obere Schiene und die untere Schiene führen zur Lösung des oben genannten Problems auf die Vorder- und/oder Rückseite des Transportbehälters, so dass die faltbare Seitenwand in ihrer bereits vollständig gefalteten Stellung auf die Vorder- und/oder Rückseite des Transportbehälters verbringbar ist. Alternativ oder zusätzlich kann die faltbare Seitenwand auch erst auf der Vorder- und/oder Rückseite des Transportbehälters zusammengefaltet werden.

Aufgabe der Erfindung ist es, eine neuartige, konstruktiv sehr robuste und einfach handhabbare Möglichkeit zu schaffen, die faltbare Seitenwand eines Aufbaus für die Durchführung eines Verladevorgangs aus dem Bereich der Verladeöffnung zu entfernen.

Diese Aufgabe wird bei einem Aufbau der eingangs genannten Art erfindungsgemäß dadurch gelöst, dass wenigstens ein Teil eines an ein seitliches Ende des Aufbaus angrenzenden Endabschnitts der oberen Schiene in Richtung der Längserstreckung der oberen Schiene geradlinig zwischen einer vollständig eingefahrenen Stellung und einer vollständig ausgefahrenen Stellung bewegbar an dem Aufbau angeordnet ist, wobei der Teil des Endabschnitts der oberen Schiene in seiner vollständig eingefahrenen Stellung nicht über das seitliche Ende des Aufbaus hinausragt und in seiner vollständig ausgefahrenen Stellung zumindest teilweise über das seitliche Ende des Aufbaus hinausragt.

Gemäß der Erfindung ist es nicht erforderlich, die in ihrer vollständig oder nahezu vollständig gefalteten Stellung befindliche faltbare Seitenwand über zusätzliche Schienen aus dem Bereich der Verladeöffnung zu entfernen, was insbesondere bei einer Schienenführung um eine Ecke des Aufbaus mit einer erschwerten Handhabung der faltbaren Seitenwand und einer unerwünschten Erhöhung des Gewichtes des Aufbaus einhergeht. Stattdessen kann die faltbare Seitenwand an wenigstens einem seitlichen Ende des Aufbaus geradlinig über die Verladeöffnung hinaus in eine Stellung bewegt werden, in der die Verladeöffnung vorzugsweise vollständig freigegeben ist. Die faltbare Seitenwand und somit der Aufbau selbst sind hierdurch im Gegensatz zu herkömmlichen Aufbauten sehr einfach handhabbar, was mit einer vorteilhaften Verringerung der für einen Verladevorgang benötigten Zeit verbunden ist. Zudem ist der Teil des Endabschnitts der oberen Schiene an dem Aufbau angeordnet, ohne dass hierfür ein die Bemaßung des Aufbaus vergrößernder, zusätzlicher Bauraum benötigt wird. Ferner ist gerade die Anordnung von um eine Ecke des Aufbaus verlaufenden Schienen in den Eckbereich nachteilig, da dort durch Kontakt mit anderweitigen Gegenständen eine punktuelle Kraft auf die Schienen ausgeübt wird, wodurch die Schienen im Eckbereich leicht Schaden nehmen können, was wiederum die Funktion eines entsprechend ausgestatteten Aufbaus einschränken und sogar unmöglich machen kann. Demgegenüber ist die erfindungsgemäße Lösung der obigen Aufgabe deutlich robuster, insbesondere da keine zusätzlichen Bauteile benötigt werden, welche an ungünstigen, für äußere Krafteinwirkungen offenen Abschnitten des Aufbaus anzuordnen sind.

Hierbei kann die faltbare Seitenwand beispielsweise zunächst in ihre vollständig oder nahezu vollständig gefaltete Stellung gebracht und an das seitliche Ende des Aufbaus bewegt werden, an das der bewegbare Teil des Endabschnitts der oberen Schiene angrenzt. Anschließend kann die faltbare Seitenwand gemeinsam mit dem Teil des Endabschnitts der oberen Schiene in eine die Verladeöffnung freigebende Stellung bewegt werden. Es ist aber alternativ auch möglich, zunächst den Teil des Endabschnitts der oberen Schiene, an dem die faltbare Seitenwand nicht angeordnet ist, in seine vorzugsweise vollständig ausgefahrene Stellung zu überführen und anschließend die faltbare Seitenwand in ihre die Verladeöffnung freigebende Stellung zu bewegen. Das Falten der faltbaren Seitenwand kann an dem ausgefahrenen Teil des Endabschnitts der oberen Schiene oder bereits dann vorgenommen werden, wenn die faltbare Seitenwand noch von der übrigen oberen Schiene gehalten wird.

Der Teil des Endabschnitts der oberen Schiene soll erfindungsgemäß in seiner vollständig ausgefahrenen Stellung zumindest teilweise über das seitliche Ende des Aufbaus hinausragen. Vorzugsweise ragt der Teil des Endabschnitts der oberen Schiene derart weit über das seitliche Ende des Aufbaus hinaus, dass die faltbare Seitenwand zur vollständigen Freigabe der Verladeöffnung außerhalb der Verladeöffnung angeordnet werden kann. Im Rahmen der Erfindung sind jedoch auch technische Lösungen denkbar, bei denen die faltbare Seitenwand noch einen geringfügigen Teil der Verladeöffnung abdeckt.

Im Rahmen der Erfindung können auch an beiden Endabschnitten der oberen Schiene entsprechend bewegbar an dem Aufbau angeordnete Teile vorgesehen sein, falls gewünscht. Zudem ist es auch möglich, dass wenigstens ein Endabschnitt der oberen Schiene vollständig entsprechend bewegbar an dem Aufbau angeordnet ist.

Gemäß einer vorteilhaften Ausgestaltung der Erfindung ist der Teil des Endabschnitts der oberen Schiene eine bewegliche Profilschiene einer im Bereich des seitlichen Endes des Aufbaus angeordneten Teleskopschienenführung oder eines entsprechend angeordneten Teleskoprohrs oder ist der Teil des Endabschnitts der oberen Schiene über eine Teleskopschienenführung oder ein Teleskoprohr in Richtung der Längserstreckung der oberen Schiene bewegbar an dem Aufbau angeordnet. Dies stellt eine konstruktiv einfach zu realisierende und robuste Ausgestaltung des erfindungsgemäßen Aufbaus dar. Die Anzahl der jeweilig relativ zu dem Aufbau bewegbaren Profilschienen der Teleskopschienenführung beziehungsweise der bewegbaren Rohrelemente des Teleskoprohrs kann an den jeweiligen Einsatzzweck und an technische Anforderungen, insbesondere an die vorteilhafterweise auszufahrende Weglänge, angepasst werden. Der Vorteil der Verwendung eines Teleskoprohrs, beispielsweise mit rundem oder polygonalem Querschnitt, besteht unter anderem darin, dass auch gänzlich auf eine Lagerung der einzelnen Rohrelemente des Teleskoprohrs untereinander über Rollen verzichtet werden kann. Jedoch ist klar, dass auch die Profilschienen einer Teleskopschienenführung statt über Rollen zumindest teilweise über Gleitkörper bewegbar aneinander gelagert sein können.

Nach einer weiteren vorteilhaften Ausgestaltung der Erfindung entspricht die Länge des Teils des Endabschnitts der oberen Schiene zumindest der Breite der faltbaren Seitenwand in ihrer vollständig oder nahezu vollständig gefalteten Stellung. Hierdurch lässt sich beispielsweise bei Verwendung einer Teleskopschienenführung mit lediglich zwei Profilschienen gewährleisten, dass die Verladeöffnung vollständig freigegeben werden kann.

Eine weitere vorteilhafte Ausgestaltung der Erfindung sieht vor, dass der Aufbau Mittel zum Sichern der vollständig eingefahrenen und/oder vollständig ausgefahrenen Stellung des Teils des Endabschnitts der oberen Schiene aufweist. Die Mittel zum Sichern der vollständig eingefahrenen Stellung des Teils des Endabschnitts der oberen Schiene sind erforderlich, um zu verhindern, dass der Teil des Endabschnitts der oberen Schiene unbeabsichtigt, beispielsweise während des Fahrbetriebs eines mit dem Aufbau ausgestatteten Fahrzeugs, in seine ausgefahrene Stellung gelangt. Die Mittel zum Sichern der vollständig ausgefahrenen Stellung des Teils des Endabschnitts der oberen Schiene können erforderlich sein, um zu verhindern, dass sich der Teil des Endabschnitt der oberen Schiene durch äußere Einflüsse, wie beispielsweise die auf ihn einwirkende Gewichtskraft oder Wind, während eines Verladevorgangs in Richtung seiner vollständig eingefahrenen Stellung bewegt, da hierdurch ein Teil der Verladeöffnung durch die faltbare Seitenwand abgedeckt werden könnte, was gerade verhindert werden soll. Die Ausgestaltung dieser Mittel kann an die jeweilige Ausgestaltung des Aufbaus und die technischen Anforderungen angepasst werden.

Gemäß einer weiteren vorteilhaften Ausgestaltung der Erfindung weist der Aufbau Mittel zum Sichern der vollständig oder nahezu vollständig gefalteten Stellung der von dem Teil des Endabschnitts der oberen Schiene gehaltenen, faltbaren Seitenwand auf. Hierdurch kann verhindert werden, dass sich die in ihrer vollständig oder nahezu vollständig gefalteten Stellung befindliche faltbare Seitenwand unbeabsichtigt entfaltet und somit in den Bereich der Verladeöffnung gelangt, während sie von dem Teil des Endabschnitts der oberen Schiene gehalten wird.

Nach einer weiteren vorteilhaften Ausgestaltung der Erfindung ist der Teil des Endabschnitts der oberen Schiene in seiner vollständig ausgefahrenen Stellung um eine vertikale Schwenkachse schwenkbar an dem seitlichen Ende des Aufbaus angeordnet ist. Beispielsweise kann der Teil des Endabschnitts der oberen Schiene um die vertikale Schwenkachse schwenkbar mit einer an dem seitlichen Ende des Aufbaus angeordneten Ecksäule des Aufbaus verbunden sein. Der Teil des Endabschnitts der oberen Schiene kann hierdurch beispielsweise von seiner mit der übrigen oberen Schiene fluchtenden Stellung in eine zur Vorderseite oder Rückseite des Aufbaus parallele Stellung überführt werden. Hierdurch lässt sich die gefaltete faltbare Seitenwand platzsparend an der Vorderseite oder Rückseite des Aufbaus anordnen. In einer solchen Stellung ist die faltbare Seitenwand weitestgehend vor Beschädigungen bei einem Verladevorgang, beispielsweise durch einen Kontakt mit Ladung oder einem Flurförderfahrzeug, geschützt. Der Aufbau kann Mittel zum Sichern der Ruhestellung des Teils des Endabschnitts der oberen Schiene aufweisen, in der er im Wesentlichen parallel zu der weiteren an das seitliche Ende des Aufbaus angrenzenden Seitenwand ausgerichtet ist. Hierdurch kann verhindert werden, dass sich der Teil des Endabschnitts der oberen Schiene bei einem Verladevorgang zusammen mit der an ihm angeordneten faltbaren Seitenwand selbsttätig oder durch äußere Einflüsse aus seiner Ruhestellung heraus bewegt.

Eine weitere vorteilhafte Ausgestaltung sieht vor, dass der Aufbau eine im unteren Bereich der seitlichen Verladeöffnung angeordnete untere Schiene aufweist, an der die faltbare Seitenwand zwischen ihrer vollständig entfalteten Stellung und ihrer vollständig gefalteten Stellung bewegbar gelagert ist, wobei wenigstens ein Teil eines an das seitliche Ende des Aufbaus angrenzenden Endabschnitts der unteren Schiene in Richtung der Längserstreckung der unteren Schiene geradlinig zwischen einer vollständig eingefahrenen Stellung und einer vollständig ausgefahrenen Stellung bewegbar an dem Aufbau angeordnet ist, und wobei der Teil des Endabschnitts der unteren Schiene in seiner vollständig eingefahrenen Stellung nicht über das seitliche Ende des Aufbaus hinausragt und in seiner vollständig ausgefahrenen Stellung zumindest teilweise über das seitliche Ende des Aufbaus hinausragt. Hiernach wird die faltbare Seitenwand sowohl an ihrem oberen Ende als auch an ihrem unteren Ende in jedem Zustand sicher an Schienen geführt, was die Handhabbarkeit der faltbaren Seitenwand und damit des Aufbaus deutlich vereinfacht.

Gemäß einer weiteren vorteilhaften Ausgestaltung der Erfindung ist der Teil des Endabschnitts der unteren Schiene eine bewegliche Profilschiene einer im Bereich des seitlichen Endes des Aufbaus angeordneten Teleskopschienenführung oder eines entsprechend angeordneten Teleskoprohrs oder ist der Teil des Endabschnitts der unteren Schiene über eine Teleskopschienenführung oder ein Teleskoprohr in Richtung der Längserstreckung der unteren Schiene bewegbar an dem Aufbau angeordnet. Dies stellt ebenfalls eine konstruktiv einfach zu realisierende und robuste Ausgestaltung des erfindungsgemäßen Aufbaus dar. Die Anzahl der jeweilig relativ zu dem Aufbau bewegbaren Profilschienen der Teleskopschienenführung beziehungsweise der bewegbaren Rohrelemente des Teleskoprohrs kann an den jeweiligen Einsatzzweck und an technische Anforderungen angepasst werden.

Nach einer weiteren vorteilhaften Ausgestaltung der Erfindung entspricht die Länge des Teils des Endabschnitts der unteren Schiene zumindest der Breite der faltbaren Seitenwand in ihrer vollständig oder nahezu vollständig gefalteten Stellung. Hierdurch lässt sich beispielsweise bei Verwendung einer Teleskopschienenführung mit lediglich zwei Profilschienen ebenfalls gewährleisten, dass die Verladeöffnung vollständig freigegeben werden kann.

Gemäß einer weiteren vorteilhaften Ausgestaltung der Erfindung weist der Aufbau Mittel zum Sichern der vollständig eingefahrenen und/oder vollständig ausgefahrenen Stellung des Teils des Endabschnitts der unteren Schiene auf. Die Mittel zum Sichern der vollständig eingefahrenen Stellung des Teils des Endabschnitts der unteren Schiene sind erforderlich, um zu verhindern, dass der Teil des Endabschnitts der unteren Schiene unbeabsichtigt, beispielsweise während des Fahrbetriebs eines mit dem Aufbau ausgestatteten Fahrzeugs, in seine ausgefahrene Stellung gelangt. Die Mittel zum Sichern der vollständig ausgefahrenen Stellung des Teils des Endabschnitts der unteren Schiene können erforderlich sein, um zu verhindern, dass sich der Teil des Endabschnitts der unteren Schiene durch äußere Einflüsse, wie beispielsweise die auf ihn einwirkende Gewichtskraft oder Wind, während eines Verladevorgangs in Richtung seiner vollständig eingefahrenen Stellung bewegt, da hierdurch ein Teil der Verladeöffnung durch die faltbare Seitenwand abgedeckt werden könnte, was gerade verhindert werden soll. Die Ausgestaltung dieser Mittel kann an die jeweilige Ausgestaltung des Aufbaus angepasst werden.

Eine weitere vorteilhafte Ausgestaltung der Erfindung sieht vor, dass der Aufbau Mittel zum Sichern der vollständig oder nahezu vollständig gefalteten Stellung der von dem Teil des Endabschnitts der unteren Schiene gehaltenen, faltbaren Seitenwand aufweist. Hierdurch kann verhindert werden, dass sich die in ihrer vollständig oder nahezu vollständig gefalteten Stellung befindliche faltbare Seitenwand unbeabsichtigt entfaltet und somit in den Bereich der Verladeöffnung gelangt, während sie von dem Teil des Endabschnitts der unteren Schiene gehalten wird.

Gemäß einer weiteren vorteilhaften Ausgestaltung der Erfindung ist der Teil des Endabschnitts der unteren Schiene in seiner vollständig ausgefahrenen Stellung um eine vertikale Schwenkachse schwenkbar an dem seitlichen Ende des Aufbaus angeordnet. Beispielsweise kann der Teil des Endabschnitts der unteren Schiene um die vertikale Schwenkachse schwenkbar mit einer an dem seitlichen Ende des Aufbaus angeordneten Ecksäule des Aufbaus verbunden sein. Der Teil des Endabschnitts der unteren Schiene kann hierdurch beispielsweise von seiner mit der übrigen unteren Schiene fluchtenden Stellung in eine zur Vorderseite oder Rückseite des Aufbaus parallele Stellung überführt werden. Hierdurch lässt sich die gefaltete faltbare Seitenwand platzsparend an der Vorderseite oder Rückseite des Aufbaus anordnen. In einer solchen Stellung ist die faltbare Seitenwand weitestgehend vor Beschädigungen bei einem Verladevorgang beispielsweise durch einen Kontakt mit Ladung oder einem Flurförderfahrzeug geschützt. Der Aufbau kann Mittel zum Sichern der Ruhestellung des Teils des Endabschnitts der unteren Schiene aufweisen, in der er im Wesentlichen parallel zu der weiteren an das seitliche Ende des Aufbaus angrenzenden Seitenwand ausgerichtet ist. Hierdurch kann verhindert werden, dass sich der Teil des Endabschnitts der unteren Schiene bei einem Verladevorgang zusammen mit der an ihm angeordneten faltbaren Seitenwand selbsttätig oder durch äußere Einflüsse aus seiner Ruhestellung heraus bewegt.

Nach einer weiteren vorteilhaften Ausgestaltung der Erfindung ist das Dach des Aufbaus wenigstens an einer Seite mittels eines Kraftantriebs heb- und senkbar, wobei das obere Ende oder das untere Ende der faltbaren Seitenwand über in vertikaler Richtung teleskopierbare Führungseinheiten bewegbar an der oberen Schiene bzw. der unteren Schiene gelagert ist. Durch diese Bewegbarkeit des Daches relativ zu dem übrigen Aufbau werden eine maximale Ausnutzung des zur Verfügung stehenden Laderaums und ein einfaches Be- und Entladen des Aufbaus ermöglicht. Wegen der Anordnung von vertikal teleskopierbaren Führungseinheiten als Mittel zum Lagern der faltbaren Seitenwand an den Schienen ist eine Bewegung des Daches des Aufbaus relativ zu dem übrigen Aufbau in keiner Positionierung der faltbaren Seitenwand relativ zu dem übrigen Aufbau eingeschränkt.

Es kann des Weiteren vorgesehen sein, dass der Teil des Endabschnitts der oberen Schiene und der Teil des Endabschnitts der unteren Schiene über ein vertikal ausgerichtetes Stabilisierungselement miteinander verbunden sind. Hierdurch wird eine konstruktiv robuste Einheit aus den Teilen der Endabschnitte und dem Stabilisierungselement gebildet, um die Handhabbarkeit des entsprechend ausgebildeten Aufbaus zu vereinfachen. Das Stabilisierungselement kann als Profil aus Metall, Kunststoff oder einem Verbundwerkstoff hergestellt sein.

Zudem kann die faltbare Seitenwand formstabile Faltelemente aufweisen, die an der oberen bzw. unteren Schiene bewegbar angeordnet und um vertikale Schwenkachsen schwenkbeweglich miteinander verbunden sind. Es besteht auch die Möglichkeit, die faltbare Seitenwand des Aufbaus allein durch gelenkig miteinander verbundene Faltelemente auszubilden, ohne dass zudem eine Plane vorhanden sein muss. Eine solche faltbare Seitenwand lässt sich schnell und einfach von ihrer entfalteten Stellung in ihre vollständig oder nahezu vollständig gefaltete Stellung überführen oder umgekehrt. Die faltbare Seitenwand kann auch eine Plane aufweisen, welche an der oberen Schiene oder an den Faltelementen aufgehängt ist. Die Aufhängung der Plane kann gemäß den jeweiligen Anforderungen und Wünschen variiert werden. Die faltbare Seitenwand kann auch allein durch eine Plane gebildet sein, die an der oberen bzw. unteren Schiene bewegbar angeordnet ist. Hiernach kann auf die Anordnung von formstabilen Faltelementen verzichtet werden. Es wird lediglich eine sich auf gewünschte Art und Weise faltende Plane an der oberen Schiene oder an der oberen und unteren Schiene geführt. Ferner können an der Plane Versteifungselemente angeordnet sein. Diese Versteifungselemente können der Unterstützung der funktionsgemäßen Faltung der faltbaren Seitenwand dienen. Auch können sie vorgesehen sein, um eine Beschädigung der Plane in bestimmten Bereichen zu verhindern, welche durch einen Kontakt mit Gütern oder durch äußere Gewalt, beispielsweise durch einen beabsichtigten Einbruch, entstehen könnten.

Die Erfindung lässt sich sowohl bei neu hergestellten Aufbauten als auch als Nachrüstung von bereits vorhandenen Aufbauten realisieren, was mit den oben genannten Vorteilen verbunden ist. Hierbei können verschiedenste Kombinationen der vorgenannten Ausgestaltungen verwirklicht sein.

Weitere Vorteile und Merkmale der vorliegenden Erfindung werden im Folgenden anhand des in den beiliegenden Figuren gezeigten Ausführungsbeispiels für den erfindungsgemäßen Aufbau näher erläutert. Dabei zeigen
- Figur 1: eine Seitenansicht eines Ausführungsbeispiels für den erfindungsgemäßen Aufbau im geschlossenen Zustand,
- Figur 2: eine Seitenansicht des in Figur 1 gezeigten Aufbaus mit gefalteter faltbarer Seitenwand,
- Figur 3: eine Ansicht des in Figur 2 gezeigten Aufbaus von oben,
- Figur 4: eine Seitenansicht des in den Figuren 1 und 2 gezeigten Aufbaus mit gefalteter faltbarer Seitenwand und ausgefahrenen Endabschnittteilen,
- Figur 5: eine Ansicht des in Figur 4 gezeigten Aufbaus von oben in zwei unterschiedlichen Zuständen, und
- Figur 6: eine Seitenansicht des in Figur 4 gezeigten Aufbaus mit angehobenem Dach in zwei unterschiedlichen Zuständen.

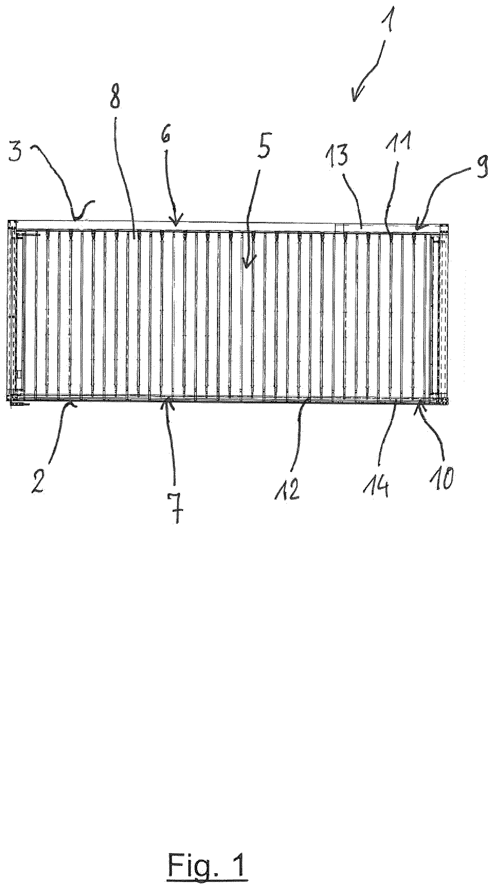

In Figur 1 ist ein Aufbau 1 zum Befördern von Gütern in einer Seitenansicht dargestellt. Der Aufbau 1 umfasst einen Boden 2 und ein Dach 3. Auf der dem Betrachter zugewandten Seite des Aufbaus 1 ist eine seitliche Verladeöffnung 4 angeordnet, die in dem in Figur 1 gezeigten Zustand des Aufbaus 1 vollständig mit einer faltbaren Seitenwand 5 abgedeckt und hierdurch geschlossen ist.

Die faltbare Seitenwand 5 ist über Führungseinrichtungen 11 an einer im oberen Bereich der seitlichen Verladeöffnung 4 angeordneten oberen Schiene 6 und über Führungseinrichtungen 12 an einer im unteren Bereich der seitlichen Verladeöffnung 4 angeordneten unteren Schiene 7 zwischen der gezeigten vollständig entfalteten Stellung und einer vollständig gefalteten Stellung bewegbar gelagert. Die faltbare Seitenwand 5 weist formstabile Faltelemente 8 auf, die an der oberen Schiene 6 und der unteren Schiene 7 bewegbar angeordnet und um nicht näher dargestellte vertikale Schwenkachsen schwenkbeweglich miteinander verbunden sind. Zudem weist die faltbare Seitenwand 5 eine Plane auf, welche an der oberen Schiene 6 und gegebenenfalls der unteren Schiene 7 oder an den Faltelementen 8 aufgehängt und aus Übersichtlichkeitsgründen nicht näher dargestellt ist.

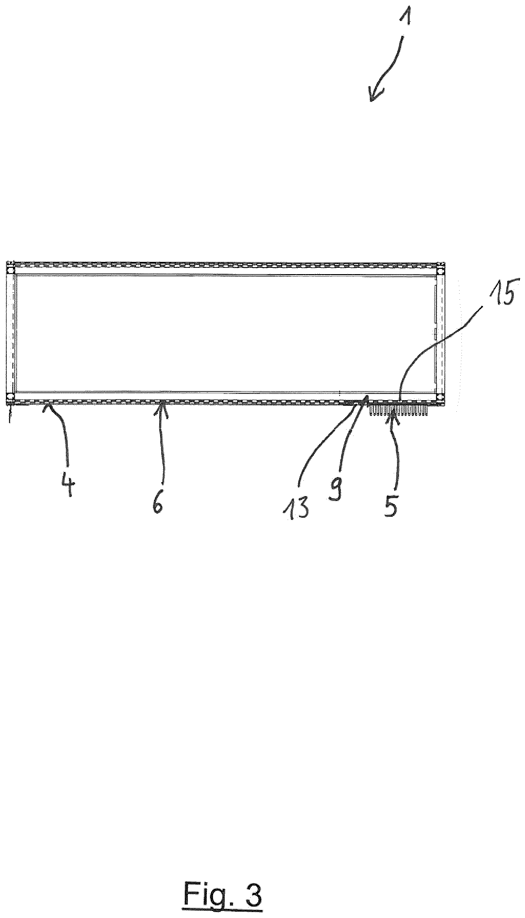

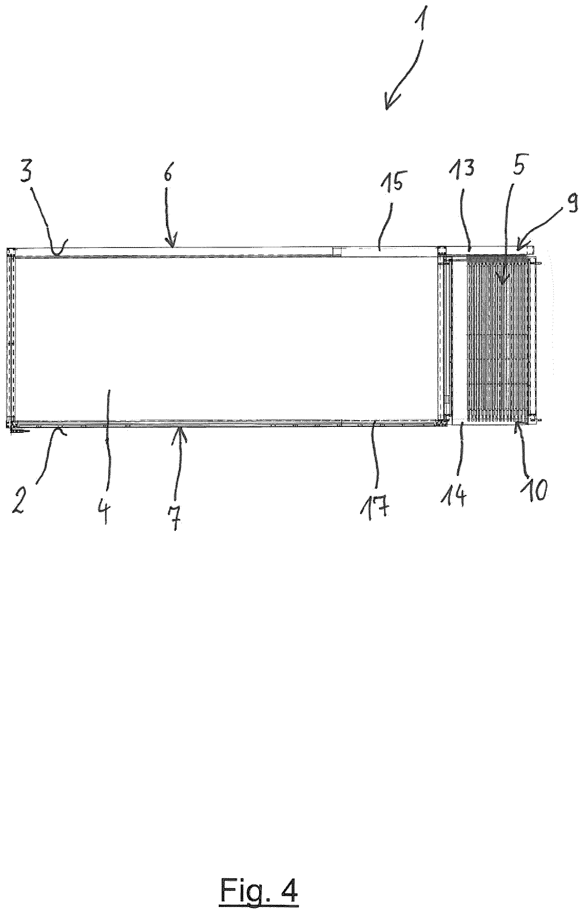

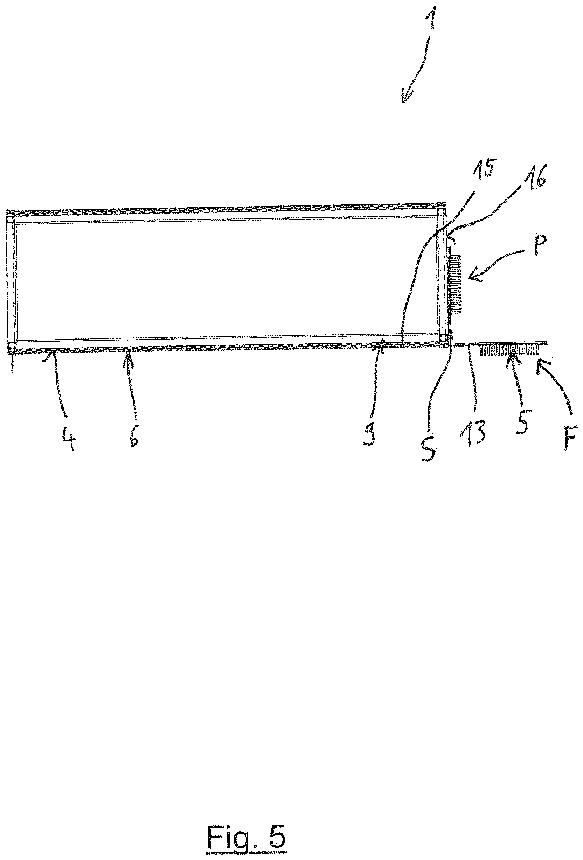

Die obere Schiene 6 weist einen an das rechts dargestellte seitliche Ende des Aufbaus 1 angrenzenden Endabschnitt 9 auf, von dem ein in den Figuren 3 und 5 gezeigter Teil 13 in Richtung der Längserstreckung der oberen Schiene 6 geradlinig zwischen der gezeigten vollständig eingefahrenen Stellung und einer in den Figuren 4 bis 6 gezeigten vollständig ausgefahrenen Stellung bewegbar an dem Aufbau 1 angeordnet ist. Wie Figur 1 zeigt, ragt der Teil 13 des Endabschnitt 9 der oberen Schiene 6 in seiner vollständig eingefahrenen Stellung nicht über das seitliche Ende des Aufbaus 1 hinaus. Auch die untere Schiene 7 weist einen an das rechts dargestellte seitliche Ende des Aufbaus 1 angrenzenden Endabschnitt 10 auf, von dem ein Teil 14 in Richtung der Längserstreckung der unteren Schiene 7 geradlinig zwischen der gezeigten vollständig eingefahrenen Stellung und der in den Figuren 4 bis 6 gezeigten vollständig ausgefahrenen Stellung bewegbar an dem Aufbau 1 angeordnet ist.

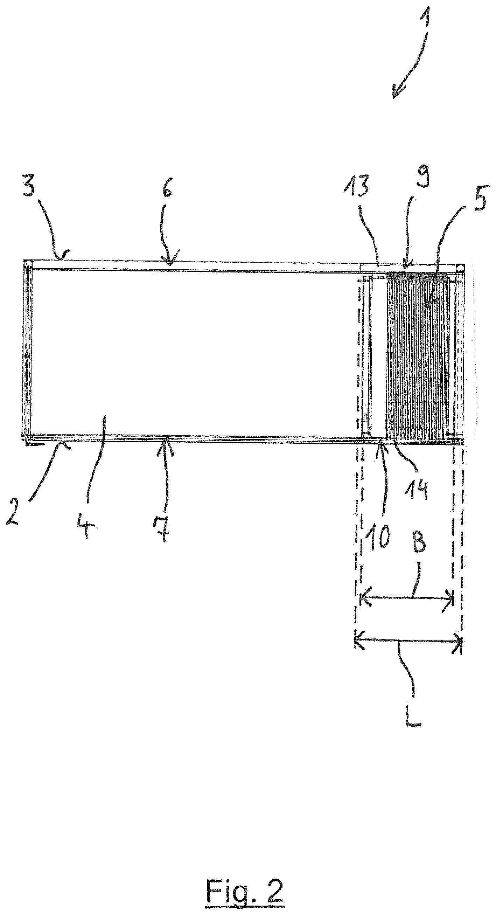

Figur 2 zeigt den in Figur 1 dargestellten Aufbau 1 mit vollständig oder nahezu vollständig gefalteter Seitenwand 5. In diesem Zustand deckt die faltbare Seitenwand 5 einen Teil der Verladeöffnung 4 ab, welcher dadurch nicht vollständig zugänglich ist. Die faltbare Seitenwand 5 ist in einem Bereich der Verladeöffnung 4 angeordnet, in dem sie von den Teilen 13 und 14 der Endabschnitte 9 und 10 der Schienen 6 und 7 gehalten wird. Wie zu erkennen ist, entspricht die Länge L der Teile 13 und 14 der Endabschnitte 9 und 10 zumindest der Breite B der faltbaren Seitenwand 5 in ihrer vollständig oder nahezu vollständig gefalteten Stellung.

Figur 3 zeigt den in Figur 2 gezeigten Aufbau 1 von oben, wodurch erkennbar ist, dass zumindest der Teil 13 des Endabschnitts 9 der oberen Schiene 6 eine bewegliche Profilschiene einer im Bereich des seitlichen Endes des Aufbaus 1 angeordneten Teleskopschienenführung ist, die neben der beweglichen Profilschiene eine ortsfest an dem Aufbau 1 angeordnete Profilschiene 15 aufweist.

Figur 4 zeigt eine Seitenansicht des in den Figuren 1 und 2 gezeigten Aufbaus 1 mit gefalteter faltbarer Seitenwand 5 und ausgefahrenen Teilen 13 und 14 der Endabschnitte 9 und 10. Die faltbare Seitenwand 5 ist an den Teilen 13 und 14 der Endabschnitte 9 und 10 angeordnet und wird von diesen gehalten. Die Verladeöffnung 4 ist in diesem Zustand des Aufbaus 1 vollständig freigegeben. Des Weiteren ist zu erkennen, dass die Teile 13 und 14 der Endabschnitte 9 und 10 in ihren vollständig ausgefahrenen Stellungen zumindest teilweise über das seitliche Ende des Aufbaus 1 hinausragen. Ferner sind die ortsfest an dem Aufbau 1 angeordnete Profilschiene 15 und die ortsfest an dem Aufbau 1 angeordnete Profilschiene 17 zu erkennen, wobei die Profilschiene 17 zusammen mit dem Teil 14 des Endabschnitts 10 eine weitere Teleskopschienenführung ausbildet.

Figur 5 zeigt eine Ansicht des in Figur 4 gezeigten Aufbaus 1 von oben in zwei unterschiedlichen Zuständen. In einem Zustand befinden sich die Teile 13 und 14 der Endabschnitte 9 und 10 sowie die daran angeordnete faltbare Seitenwand 5 in einer funktionsgemäßen Stellung F, wie sie in Figur 4 dargestellt ist. Des Weiteren ist ein Zustand des Aufbaus 1 gezeigt, in dem sich die Teile 13 und 14 der Endabschnitte 9 und 10 sowie die faltbare Seitenwand 5 ist einer Stellung P befinden, in der die Teile 13 und 14 der Endabschnitte 9 und 10 parallel zu der an das seitliche Ende des Aufbaus 1 angrenzenden weiteren Seitenwand 16 angeordnet sind. Um die Teile 13 und 14 der Endabschnitte 9 und 10 zwischen den Stellungen F und P hin und her bewegen zu können, sind die Teile 13 und 14 der Endabschnitte 9 und 10 in ihren vollständig ausgefahrenen Stellungen um eine vertikale Schwenkachse S schwenkbar an dem seitlichen Ende des Aufbaus 1 angeordnet.

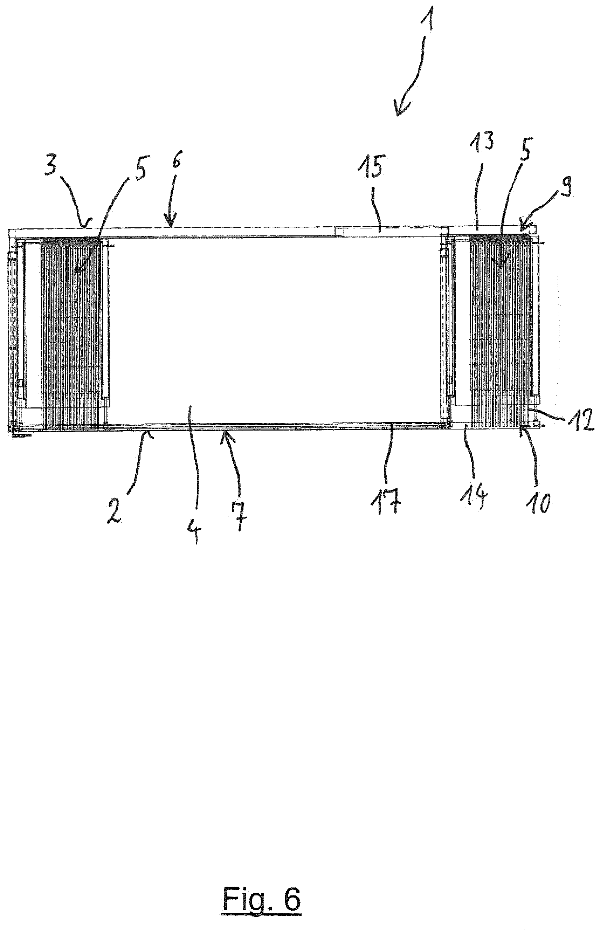

Figur 6 zeigt eine Seitenansicht des in Figur 4 gezeigten Aufbaus 1 mit angehobenem Dach 3 in zwei unterschiedlichen Zuständen. Das Anheben des Daches 3 erfolgt über einen nicht dargestellten Kraftantrieb. Der obere Endabschnitt 9 wird beim Anheben des Daches 3 mit angehoben. Hierdurch wird auch die faltbare Seitenwand 5 angehoben. Um diese Bewegung der faltbaren Seitenwand 5 gegenüber dem unteren Endabschnitt 10, welcher nicht mit angehoben wird, aufzufangen, ist das untere Ende der faltbaren Seitenwand 5 über in vertikaler Richtung teleskopierbare Führungseinheiten 12 bewegbar an der unteren Schiene 7 beziehungsweise an deren Endabschnitt 10 beziehungsweise an dessen Teil 14 gelagert. Die beiden gezeigten Zustände des Aufbaus 1 unterscheiden sich durch die Relativstellung der faltbaren Seitenwand 5 zu dem übrigen Aufbau.

**Bezugszeichenliste:**

| Zeichen | Bezeichnung |
|---|---|
| 1 | Aufbau |
| 2 | Boden |
| 3 | Dach |
| 4 | Verladeöffnung |
| 5 | faltbare Seitenwand |
| 6 | obere Schiene |
| 7 | untere Schiene |
| 8 | Faltelement |
| 9 | oberer Endabschnitt |
| 10 | unterer Endabschnitt |
| 11 | Führungseinrichtung |
| 12 | Führungseinrichtung |
| 13 | bewegbarer Endabschnittteil |
| 14 | bewegbarer Endabschnittteil |
| 15 | ortsfester Endabschnittteil |
| 16 | Seitenwand |
| 17 | ortsfester Endabschnittteil |
| B | Breite |
| L | Länge |
| S | Schwenkachse |
| P | parallele Stellung |
| F | funktionsgemäße Stellung |

## Patentansprüche

1. Aufbau (1) zum Befördern von Gütern, insbesondere für einen Lastkraftwagen, einen Anhänger, einen Absetzcontainer, eine Wechselbrücke, einen Sattelauflieger oder dergleichen, aufweisend wenigstens eine seitliche Verladeöffnung (4) und eine faltbare Seitenwand (5), wobei die faltbare Seitenwand (5) zumindest an einer im oberen Bereich der seitlichen Verladeöffnung (4) angeordneten oberen Schiene (6) zwischen einer vollständig entfalteten Stellung und einer vollständig gefalteten Stellung bewegbar gelagert ist,
**dadurch gekennzeichnet,**
**dass** wenigstens ein Teil (13) eines an ein seitliches Ende des Aufbaus (1) angrenzenden Endabschnitts (9) der oberen Schiene (6) in Richtung der Längserstreckung der oberen Schiene (6) geradlinig zwischen einer vollständig eingefahrenen Stellung und einer vollständig ausgefahrenen Stellung bewegbar an dem Aufbau (1) angeordnet ist, wobei der Teil (13) des Endabschnitts (9) der oberen Schiene (6) in seiner vollständig eingefahrenen Stellung nicht über das seitliche Ende des Aufbaus (1) hinausragt und in seiner vollständig ausgefahrenen Stellung zumindest teilweise über das seitliche Ende des Aufbaus (1) hinausragt.

2. Aufbau (1) nach Anspruch 1, **dadurch gekennzeichnet, dass** der Teil (13) des Endabschnitts (9) der oberen Schiene (6) eine bewegliche Profilschiene einer im Bereich des seitlichen Endes des Aufbaus (1) angeordneten Teleskopschienenführung oder eines entsprechend angeordneten Teleskoprohrs ist oder dass der Teil (13) des Endabschnitts (9) der oberen Schiene (6) über eine Teleskopschienenführung oder ein Teleskoprohr in Richtung der Längserstreckung der oberen Schiene (6) bewegbar an dem Aufbau (1) angeordnet ist.

3. Aufbau (1) nach Anspruch 1 oder 2, **dadurch gekennzeichnet, dass** die Länge (L) des Teils (13) des Endabschnitts (9) der oberen Schiene (6) zumindest der Breite (B) der faltbaren Seitenwand (5) in ihrer vollständig oder nahezu vollständig gefalteten Stellung entspricht.

4. Aufbau (1) nach einem der vorhergehenden Ansprüche, **gekennzeichnet durch** Mittel zum Sichern der vollständig eingefahrenen und/oder vollständig ausgefahrenen Stellung des Teils des Endabschnitts (9) der oberen Schiene (6).

5. Aufbau (1) nach einem der vorhergehenden Ansprüche, **gekennzeichnet durch** Mittel zum Sichern der vollständig oder nahezu vollständig gefalteten Stellung der von dem Teil (13) des Endabschnitts (9) der oberen Schiene (6) gehaltenen, faltbaren Seitenwand (5).

6. Aufbau (1) nach einem der vorhergehenden Ansprüche, **dadurch gekennzeichnet, dass** der Teil (13) des Endabschnitts (9) der oberen Schiene (6) in seiner vollständig ausgefahrenen Stellung um eine vertikale Schwenkachse (S) schwenkbar an dem seitlichen Ende des Aufbaus (1) angeordnet ist.

7. Aufbau (1) nach einem der vorhergehenden Ansprüche, **gekennzeichnet durch** eine im unteren Bereich der seitlichen Verladeöffnung (4) angeordnete untere Schiene (7), an der die faltbare Seitenwand (5) zwischen ihrer vollständig entfalteten Stellung und ihrer vollständig gefalteten Stellung bewegbar gelagert ist, wobei wenigstens ein Teil (14) eines an das seitliche Ende des Aufbaus (1) angrenzenden Endabschnitts (10) der unteren Schiene (7) in Richtung der Längserstreckung der unteren Schiene (7) geradlinig zwischen einer vollständig eingefahrenen Stellung und einer vollständig ausgefahrenen Stellung bewegbar an dem Aufbau (1) angeordnet ist, und wobei der Teil (14) des Endabschnitts (10) der unteren Schiene (7) in seiner vollständig eingefahrenen Stellung nicht über das seitliche Ende des Aufbaus (1) hinausragt und in seiner vollständig ausgefahrenen Stellung zumindest teilweise über das seitliche Ende des Aufbaus (1) hinausragt.

8. Aufbau (1) nach Anspruch 7, **dadurch gekennzeichnet, dass** der Teil (14) des Endabschnitts (10) der unteren Schiene (7) eine bewegliche Profilschiene einer im Bereich des seitlichen Endes des Aufbaus (1) angeordneten Teleskopschienenführung oder eines entsprechend angeordneten Teleskoprohrs ist oder dass der Teil (14) des Endabschnitts (10) der unteren Schiene (7) über eine Teleskopschienenführung oder ein Teleskoprohr in Richtung der Längserstreckung der unteren Schiene (7) bewegbar an dem Aufbau (1) angeordnet ist.

9. Aufbau (1) nach Anspruch 7 oder 8, **dadurch gekennzeichnet, dass** die Länge (L) des Teils (14) des Endabschnitts (10) der unteren Schiene (7) zumindest der Breite (B) der faltbaren Seitenwand (5) in ihrer vollständig oder nahezu vollständig gefalteten Stellung entspricht.

10. Aufbau (1) nach einem der Ansprüche 7 bis 9, **gekennzeichnet durch** Mittel zum Sichern der vollständig eingefahrenen und/oder vollständig ausgefahrenen Stellung des Teils (14) des Endabschnitts (10) der unteren Schiene (7).

11. Aufbau (1) nach einem der Ansprüche 7 bis 10, **gekennzeichnet durch** Mittel zum Sichern der vollständig oder nahezu vollständig gefalteten Stellung der von dem Teil (14) des Endabschnitts (10) der unteren Schiene (7) gehaltenen, faltbaren Seitenwand (5).

12. Aufbau (1) nach einem der Ansprüche 7 bis 11, **dadurch gekennzeichnet, dass** der Teil (14) des Endabschnitts (10) der unteren Schiene (7) in seiner vollständig ausgefahrenen Stellung um eine vertikale Schwenkachse (S) schwenkbar an dem seitlichen Ende des Aufbaus (1) angeordnet ist.

13. Aufbau (1) nach einem der vorhergehenden Ansprüche, **dadurch gekennzeichnet, dass** das Dach (3) des Aufbaus (1) wenigstens an einer Seite mittels eines Kraftantriebs heb- und senkbar ist, wobei das obere Ende oder das untere Ende der faltbaren Seitenwand (5) über in vertikaler Richtung teleskopierbare Führungseinheiten (12) bewegbar an der oberen Schiene (6) oder an der oberen und unteren Schiene (6 und 7) gelagert ist.

## Claims

1. Assembly (1) for conveying goods, in particular for a lorry, a trailer, a skip container, a swap body, a semitrailer or the like, comprising at least one lateral loading opening (4) and a foldable lateral wall (5), whereby the foldable lateral wall (5) is movably supported on at least one upper rail (6) arranged on the upper region of the lateral loading opening (4) between a completely deployed position and a completely folded position,
**characterised in**
**that** at least one part (13) of an end portion (9) of the upper rail (6) adjacent the lateral end of the assembly (1) is arranged on the assembly (1) and movable linearly in the longitudinal direction of the upper rail (6) between a completely retracted position and a completely extended position on the assembly (1), whereby the part (13) of the end portion (9) of the upper rail (6) does not project beyond the lateral end of the assembly (1) in its completely retracted position and projects at least partially beyond the lateral end of the assembly (1) in its completely extended position.

2. Assembly (1) according to claim 1, **characterised in that** the part (13) of the end portion (9) of the upper rail (6) is a movable profile rail of a telescoping slide rail arranged in the region of the lateral end of the assembly (1) or a correspondingly arranged telescoping pipe or that the part (13) of the end portion (9) of the upper rail (6) is arranged using a telescoping slide rail or a telescopic pipe and can be moved on the assembly (1) in the longitudinal direction of the upper rail (6).

3. Assembly (1) according to claim 1 or 2, **characterised in that** the length (L) of the part (13) of the end portion (9) of the upper rail (6) corresponds to at least the width (B) of the foldable lateral wall (5) in its completely or nearly completely folded position.

4. Assembly (1) according to one of the preceding claims, **characterised by** means for securing the completely retracted position and/or completely extended position of the end portion (9) of the upper rail (6).

5. Assembly (1) according to one of the preceding claims, **characterised by** means for securing the completely or nearly completely folded position of the foldable lateral wall (5) held by the part (13) of the end portion (9) of the upper rail (6).

6. Assembly (1) according to one of the preceding claims, **characterised in that** the part (13) of the end portion (9) of the upper rail (6) in its completely extended position is swivel-mounted around a vertical swivel axis (S) at the lateral end of the assembly (1).

7. Assembly (1) according to one of the preceding claims, **characterised by** a lower rail (7) arranged in the lower region of the lateral loading opening (4), on which the foldable lateral wall (5) is movably supported between its completely deployed position and its completely folded position, whereby at least a part (14) of an end portion (10) of the lower rail (7) adjacent the lateral end of the assembly (1) is arranged on the assembly (1) and linearly movable in the longitudinal direction of the lower rail (7) between a completely retracted position and a completely extended position, and whereby the part (14) of the end portion (10) of the lower rail (7) does not project beyond the lateral end of the assembly (1) in its completely retracted position and projects at least partially beyond the lateral end of the assembly (1) in its completely extended position.

8. Assembly (1) according to claim 7, **characterised in that** the part (14) of the end portion (10) of the lower rail (7) is a movable profile rail of a telescoping slide rail arranged in the region of the lateral end of the assembly (1) or a correspondingly arranged telescoping pipe or that the part (14) of the end portion (10) of the lower rail (7) is moveably arranged on the assembly (1) in the longitudinal direction of the lower rail (7) by means of a telescoping slide rail or a telescopic pipe.

9. Assembly (1) according to claim 7 or 8, **characterised in that** the length (L) of the part (14) of the end portion (10) of the lower rail (7) corresponds to at least the width (B) of the foldable lateral wall (5) in its completely or nearly completely folded position.

10. Assembly (1) according to one of the claims 7 to 9, **characterised by** means for securing the completely retracted position and/or completely extended position of the part (14) of the end portion (10) of the lower rail (7).

11. Assembly (1) according to one of the claims 7 to 10, **characterised by** means for securing the completely or nearly completely folded position of the foldable lateral wall (5) held by the part (14) of the end portion (10) of the lower rail (7).

12. Assembly (1) according to one of the claims 7 to 11, **characterised in that** the part (14) of the end portion (10) of the lower rail (7) in its completely extended position is swivel-mounted around a vertical swivel axis (S) at the lateral end of the assembly (1).

13. Assembly (1) according to one of the preceding claims, **characterised in that** the roof (3) of the assembly (1) can be raised and lowered at least at one side using a power drive, whereby the upper end or the lower end of the foldable lateral wall (5) is movably supported on the upper rail (6) or on the upper and lower rail (6 and 7) and can be moved by means of guide units (12) telescoping in a vertical direction.

## Revendications

1. Structure (1) pour le transport de biens, en particulier pour un camion, une remorque, un conteneur mobile, une caisse mobile, une semi-remorque ou similaire, comprenant au moins une ouverture de chargement latérale (4) et une paroi latérale (5) pliable, où la paroi latérale (5) pliable est disposée de façon mobile entre une position entièrement dépliée et une position entièrement pliée au moins sur un rail supérieur (6) installé dans la zone supérieure de l'ouverture de chargement latérale (4),
**caractérisée en ce**
**qu'**au moins une partie (13) d'une section terminale (9) du rail supérieur (6) adjacente à une extrémité latérale de la structure (1) est disposée de façon mobile entre une position entièrement rentrée et une position entièrement sortie sur la structure (1), en ligne droite dans la direction de l'extension longitudinale du rail supérieur (6), où la partie (13) de la section terminale (9) du rail supérieur (6) ne dépasse pas l'extrémité latérale de la structure (1) dans sa position entièrement rentrée et dépasse au moins partiellement l'extrémité latérale de la structure (1) dans sa position entièrement sortie.

2. Structure (1) selon la revendication 1, **caractérisée en ce que** la partie (13) de la section terminale (9) du rail supérieur (6) est un rail profilé mobile d'un guide à rail télescopique disposé dans la zone de l'extrémité latérale de la structure (1) ou d'un tube télescopique disposé de façon correspondante, ou en ce que la partie (13) de la section terminale (9) du rail supérieur (6) est disposée de façon mobile sur la structure dans la direction de l'extension longitudinale du rail supérieur (6) au moyen d'un guide de rail télescopique ou d'un tube télescopique.

3. Structure (1) selon la revendication 1 ou 2, **caractérisée en ce que** la longueur (L) de la partie (13) de la section terminale (9) du rail supérieur (6) correspond au moins à la largeur (B) de la paroi latérale (5) pliable dans sa position entièrement ou presque entièrement pliée.

4. Structure (1) selon l'une quelconque des revendications précédentes, **caractérisée par** des moyens pour fixer la position entièrement entrée et/ou entièrement sortie de la partie de la section terminale (9) du rail supérieur (6).

5. Structure (1) selon l'une quelconque des revendications précédentes, **caractérisée par** des moyens pour fixer la position entièrement ou presque entièrement pliée de la paroi latérale (5) pliable maintenue par la partie (13) de la section terminale (9) du rail supérieur (6).

6. Structure (1) selon l'une quelconque des revendications précédentes, **caractérisée en ce que** la partie (13) de la section terminale (9) du rail supérieur (6) est disposée sur l'extrémité latérale de la structure (1) de façon pivotante autour d'un axe de pivotement (S) dans sa position entièrement sortie.

7. Structure (1) selon l'une quelconque des revendications précédentes, **caractérisée par** un rail inférieur (7) disposé dans la zone inférieure de l'ouverture de chargement latérale (4), sur lequel la paroi latérale (5) pliable est installée de façon mobile entre sa position entièrement pliée et sa position entièrement dépliée, où au moins une partie (14) d'une section terminale (10) du rail inférieur (7) adjacente à l'extrémité latérale de la structure (1) est disposée de façon mobile entre une position entièrement rentrée et une position entièrement sortie sur la structure (1), en ligne droite dans la direction de l'extension longitudinale du rail inférieur (7), et où la partie (14) de la section terminale (10) du rail supérieur (7) ne dépasse pas l'extrémité latérale de la structure (1) dans sa position entièrement rentrée et dépasse au moins partiellement l'extrémité latérale de la structure (1) dans sa position entièrement sortie.

8. Structure (1) selon la revendication 7, **caractérisée en ce que** la partie (14) de la section terminale (10) du rail inférieur (7) est un rail profilé mobile d'un guide à rail télescopique disposé dans la zone de l'extrémité latérale de la structure (1) ou d'un tube télescopique disposé de façon correspondante, ou en ce que la partie (14) de la section terminale (10) du rail inférieur (7) est disposée de façon mobile sur la structure dans la direction de l'extension longitudinale du rail inférieur (7) au moyen d'un guide de rail télescopique ou d'un tube télescopique.

9. Structure (1) selon la revendication 7 ou 8, **caractérisée en ce que** la longueur (L) de la partie (14) de la section terminale (10) du rail inférieur (7) correspond au moins à la largeur (B) de la paroi latérale (5) pliable dans sa position entièrement ou presque entièrement pliée.

10. Structure (1) selon l'une quelconque des revendications 7 à 9, **caractérisée par** des moyens pour fixer la position entièrement entrée et/ou entièrement sortie de la partie (14) de la section terminale (10) du rail inférieur (7).

11. Structure (1) selon l'une quelconque des revendications 7 à 10, **caractérisée par** des moyens pour fixer la position entièrement ou presque entièrement pliée de la paroi latérale (5) pliable maintenue par la partie (14) de la section terminale (10) du rail inférieur (7).

12. Structure (1) selon l'une quelconque des revendications 7 à 11, **caractérisée en ce que** la partie (14) de la section terminale (10) du rail inférieur (7) est disposée sur l'extrémité latérale de la structure (1) de façon pivotante autour d'un axe de pivotement (S) dans sa position entièrement sortie.

13. Structure (1) selon l'une quelconque des revendications précédentes, **caractérisée en ce que** le toit (3) de la structure (1) peut être au moins d'un côté soulevé ou abaissé au moyen d'un moteur, où l'extrémité supérieure ou l'extrémité inférieure de la paroi latérale (5) pliable est installée de façon mobile au moyen d'unités de guidage (12) télescopiques verticalement sur le rail supérieur (6) ou sur les rails supérieur et inférieur (6 et 7).
